# EUROPEAN PATENT SPECIFICATION

(11) **EP 3 465 362 B1**
(45) Date of publication and mention of the grant of the patent: **06.07.2022**
(21) Application number: 16903348.7
(22) Date of filing: 27.05.2016
(51) Int. Cl.: B25J 9/16

(54) **USER INTERFACE FOR A TELEOPERATED ROBOT**
BENUTZERSCHNITTSTELLE FÜR EINEN TELEBETRIEBENEN ROBOTER
INTERFACE UTILISATEUR POUR UN ROBOT TÉLÉCOMMANDÉ

(43) Date of publication of application: 10.04.2019
(73) Proprietor: ABB Schweiz AG, 5400 Baden (CH)
(72) Inventor: ROSSANO, Gregory, F., Ellington, CT 06029 (US); MARTINEZ, Carlos, Ellington, CT 06029 (US); WANG, Jianjun, Ellington, CT 06029 (US); ZHANG, Biao, Ellington, CT 06029 (US); FUHLBRIGGE, Thomas, A., Ellington, CT 06029 (US)
(74) Representative: Gregorj S.r.l.
(86) International application number: PCT/US2016/034658
(87) International publication number: WO 2017/204826

(56) References cited:
- US-A1- 2008 009 969
- US-A1- 2009 055 019
- US-A1- 2014 247 119
- ILHAN INCE ET AL: "VIRTUALITY AND REALITY: A VIDEO/GRAPHICS ENVIRONMENT FOR TELEOPERATION", DECISION AIDING FOR COMPLEX SYSTEMS. CHARLOTTESVILLE, VA., OCT. 13 - 16, 1991; [PROCEEDINGS OF THE INTERNATIONAL CONFERENCE ON SYSTEMS, MAN AND CYBERNETICS], NEW YORK, IEEE, US, vol. 2, 13 October 1991 (1991-10-13), pages 1083-1089, XP000238075, ISBN: 978-0-7803-0233-4
- BROOKS T L ET AL: "Operator vision aids for telerobotic assembly and servicing in space", PROCEEDINGS OF THE INTERNATIONAL CONFERENCE ON ROBOTICS AND AUTOMATION NICE, MAY 12 - 14, 1992; [PROCEEDINGS OF THE INTERNATIONAL CONFERENCE ON ROBOTICS AND AUTOMATION], LOS ALAMITOS, IEEE COMP. SOC. PRESS, US, vol. CONF. 8, 12 May 1992 (1992-05-12), pages 886-891, XP010027738, DOI: 10.1109/ROBOT.1992.220184 ISBN: 978-0-8186-2720-0
- KIM W S ED - INSTITUTE OF ELECTRICAL AND ELECTRONICS ENGINEERS: "Graphical operator interface for space telerobotics", PROCEEDINGS OF THE INTERNATIONAL CONFERENCE ON ROBOTICS AND AUTOMATION ATLANTA, MAY 2 - 6, 1993; [PROCEEDINGS OF THE INTERNATIONAL CONFERENCE ON ROBOTICS AND AUTOMATION], LOS ALAMITOS, IEEE COMP. SOC. PRESS, US, vol. CONF. 10, 2 May 1993 (1993-05-02), pages 761-768, XP010095364, DOI: 10.1109/ROBOT.1993.292237 ISBN: 978-0-8186-3450-5
- BEJCZY A K ET AL: "THE PHANTOM ROBOT: PREDICTIVE DISPLAYS FOR TELEOPERATION WITH TIME DELAY", PROCEEDINGS OF THE INTERNATIONAL CONFERENCE ON ROBOTICS AND AUTOMATION. CINCINNATI, MAY 13 - 18, 1990; [PROCEEDINGS OF THE INTERNATIONAL CONFERENCE ON ROBOTICS AND AUTOMATION], LOS ALAMITOS, IEEE COMP. SOC. PRESS, US, vol. -, 13 May 1990 (1990-05-13), pages 546-551, XP000139905, DOI: 10.1109/ROBOT.1990.126037 ISBN: 978-0-8186-9061-7
- SHERIDAN T B: "SPACE TELEOPERATION THROUGH TIME DELAY: REVIEW AND PROGNOSIS", IEEE TRANSACTIONS ON ROBOTICS AND AUTOMATION, IEEE INC, NEW YORK, US, vol. 9, no. 5, 1 October 1993 (1993-10-01) , pages 592-606, XP000422841, ISSN: 1042-296X, DOI: 10.1109/70.258052

## Description

### BACKGROUND

Embodiments of the present application generally relate to the teleoperation of an industrial robot. More particularly, embodiments of the present application generally relate to a user interface for the teleoperation of an industrial robot.

Industrial robots are often constructed, as well as programed, to maneuver about one or more axes of the robot. For example, certain types of industrial robots can be automatically controlled, reprogrammable, or multipurpose manipulator programmable so as to maneuver about three or more axes of the robot. Such maneuverability can accommodate movement of the robot along one or more paths and/or to one or more points so that the robot can be positioned and/or oriented to perform work, either directly or through the operation of a tool, at various locations on a workpiece. Additionally, certain robots may, or may not, be in a generally fixed location or position. More specifically, certain types or robots may be configured to, or coupled to equipment that accommodates, travel along a workpiece and/or along different locations or areas of a work space.

The article by Ilhan Ince et al, having title "Virtuality and reality: a video/graphics environment for teleoperation", relates to a graphics environment for teleoperation to be used in space teleoperation tasks and deals with predictive displays.

The article by Brooks T L et al, having title "Operator vision aids for telerobotic assembly and servicing in space", relates to operator vision aids for telerobotic assembly and servicing in space and discloses also predictive displays projecting what will happen in the future based on controller actions occurring now.

The article by Kim W S Ed, Institute of electrical and electronics engineers, having title "Graphical operator interface for space telerobotics", relates to applications of advanced graphical operator interfaces using graphics and graphical user interfaces in space telerobotics operations and deals with predictive displays.

The article by Bejczy A K et al, having title "The phantom robot: predictive displays for teleoperation with time delay", relates to predictive displays for teleoperation with time delay and describes a teleoperation technique, aimed at time-delayed bilateral teleoperator control, based on the use of a high fidelity graphics "phantom robot" controlled in real time.

Teleoperation of an industrial robot typically occurs when an operator of the industrial robot is located at a location away or apart from the robot. The distances between the operator and robot during teleoperation may vary for different circumstances or situations. For example, in certain situations, teleoperation of the robot may occur when the robot and operator are separated from each other by a protective wall or barrier, or the robot and operator are at different geographic locations. Indeed, in certain situations, the teleoperated robot may, or may not, be within the operator's line of sight. For example, in certain instances, the teleoperation of the industrial robot may occur when the robot and operator are separated by a barrier or other distances at least as the robot performs work that could be hazardous to the health or safety of operator. Further, teleoperation of the robot can occur when the operator is located at a remote facility or another, different location in the same facility.

Instances of the teleoperated robots performing work can include, but is not limited to, the robot holding, maneuvering, and/or displacing a workpiece or part, including, for example, holding a workpiece that the robot is positioning and/or orienting to be assembled to another workpiece or part. Additionally, the teleoperated robot performing work can also include, but, again, is not limited to, the robot holding, coupled to, and/or operating a tool or other device in connection with performing work on a workpiece, including, and without limitation, welding, drilling, milling, and/or shaping the workpiece, among a variety of other types of work on workpieces.

### BRIEF SUMMARY

The present invention relates to a system for providing a graphic user interface for a teleoperation robotic system having a teleoperated member at an operator station and a robot at a robot station. The system includes a computing device having at least one processor, the computing device being configured to receive a first input information having a robot indicator, the robot indicator indicating at least one of a position or an orientation of at least a portion of the robot on the graphic user interface, the robot indicator being at least one of a position or orientation a tool center point of an end effector of the robot, the first input information including information detected by one or more sensors in the robot station. The computing device is further configured to calibrate the robot indicator to a coordinate system of the graphic user interface to provide a calibrated robot indicator. Additionally, the computing device receives a second input information having a teleoperation member indicator indicating at least one of a position or an orientation of the teleoperated member on the graphic user interface, the teleoperation member indicator being at least one of a position or an orientation of a tool center point of the teleoperation member, and calibrates the teleoperation member indicator to the coordinate system of the graphic user interface to provide a calibrated teleoperation member indicator. Further, the computing device further synchronizes the calibrated position of the calibrated teleoperated member to the calibrated robot indicator. The computing device also displays on a display the graphical user interface, the graphical user interface being further configured to display a movement in the robot station that is associated with at least a movement of the robot that is correlated to the operation of the teleoperated member.

### BRIEF DESCRIPTION OF THE DRAWINGS

The description herein makes reference to the accompanying figures wherein like reference numerals refer to like parts throughout the several views.
Figure 1 illustrates a schematic of an exemplary teleoperation robotic system according to an illustrated embodiment of the present application.
Figure 2 illustrates a portion of a robot of a robot station performing exemplary work on a workpiece and in which the robot is coupled to both a force sensor and an end effector.
Figures 3A and 3B illustrate top and side views, respectively, of a graphical user interface (GUI) on a display digitally depicting the relative positions and/or orientations of a main part and a subpart, as well as a representation of a haptic joystick that is fully integrated with the GUI.
Figures 4A-4D illustrate a GUI depicting an example of the movement of a subpart and reference indicators digitally depicted by the GUI during different stages of assembly, and provides an exemplary representation of the associated manipulation of a haptic joystick that is fully integrated with the GUI during the different stages of assembly.
Figure 5A illustrates a GUI depicting a side view of an exemplary assembly of a subpart to a main part, and which provides a textual and graphical indication of force feedback information.
Figure 6 illustrates an exemplary side view of a digital representation by a GUI of a workpiece, as well as a location of tool center point (TCP) coordinates of a haptic joystick and a robot, as correlated with a coordinate system of the GUI.
Figure 7 illustrates an exemplary side view of a digital representation of a workpiece by a GUI on a display that provides guidance in the form of a path a TCP of a robot is to travel during a work process on a workpiece.
Figure 8 illustrates an exemplary side view of a digital representation by a GUI of a workpiece on a display that provides an indication of depths operations performed by the robot into the workpiece, areas of excess and reduced material, and a representation of an associated orientation of a manipulated haptic joystick that is fully integrated with the GUI.

The foregoing summary, as well as the following detailed description of certain embodiments of the present application, will be better understood when read in conjunction with the appended drawings. For the purpose of illustrating the application, there is shown in the drawings, certain embodiments. It should be understood, however, that the present application is not limited to the arrangements and instrumentalities shown in the attached drawings. Further, like numbers in the respective figures indicate like or comparable parts.

### DESCRIPTION OF THE ILLUSTRATED EMBODIMENTS

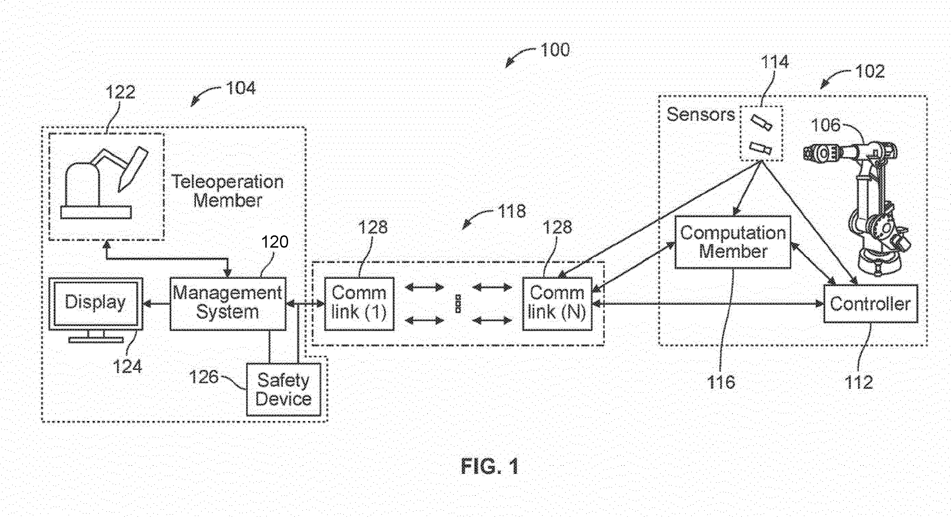

Figure 1 illustrates a schematic of an exemplary teleoperation robotic system 100 according to an illustrated embodiment of the present application. As shown, the teleoperation robotic system 100 can include at least one robot station 102 and at least one operator station 104. The teleoperation robotic system 100 can further include a communication network or link 118 that is configured to communicatively link or couple the operator station 104 to the robot station 102.

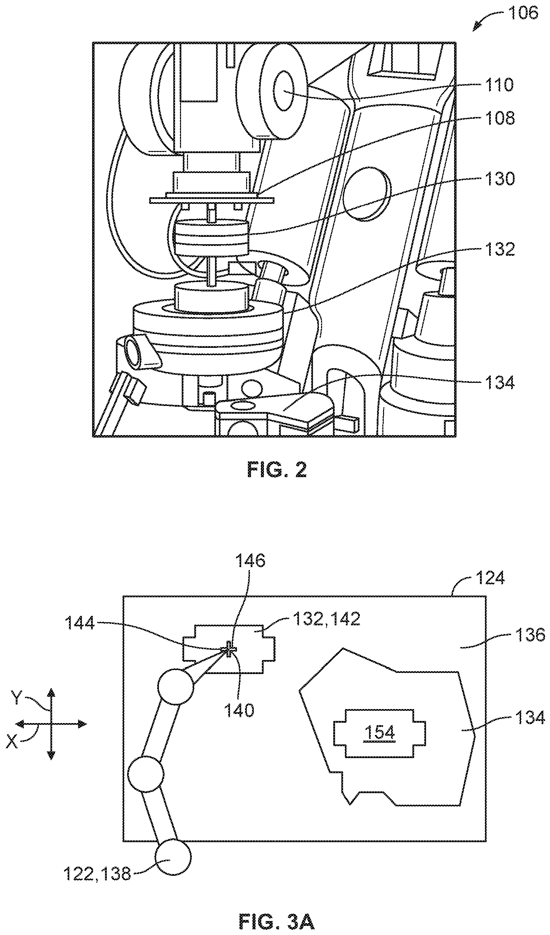

According to certain embodiments, the robot station 102 includes one or more robots 106 having one or more degrees of freedom. For example, according to certain embodiments, the robot 106 can have at least three axes, including, but not limited to, robots having six degrees of freedom. Examples of such robots can include, but are not limited to, industrial robots available from ABB, Inc. Referencing Figure 2, according to certain embodiments, an end effector 108 can be coupled or mounted to the robot 106. For example, according to certain embodiments, the end effector 108 can be mounted to a wrist or arm 110 of the robot 106. Further, as discussed below, at least portions of the wrist, arm 110, and/or end effector 108 can be moveable relative to other portions of the robot 106 and/or a workpiece via remote operation of the robot 106 and/or end effector 108 by an operator of the operator station 104, as discussed below.

According to certain embodiments, the robot 106 can be operative to position and/or orient the end effector 108 at locations within reach of a work envelope or workspace of the robot 106 that can accommodate the robot 106 utilizing the end effector 108 to perform work on a workpiece. A variety of different types of end effectors 108 can be utilized by the teleoperation robotic system 100, including, for example, an end effector 108 that is a painting or coating spraying device or tool, welding gun, gripper(s), fixture, spotlight(s), conveyor, and/or a milling or drilling tool, among other types of tools or devices that can perform work on, grip, displace, and/or perform other functions relating to a workpiece. Further, operation of the robot 106 and/or the end effector 108 can be utilized to perform work on a stationary or moving workpiece, and/or can hold the workpiece.

The robot 106 can include or be electrically coupled to one or more controllers 112. For example, according to certain embodiments, the robot 106 can include and/or be electrically coupled to one or more controllers that may, or may not, be discrete processing units, such as, for example, a single controller or any number of controllers. The controller 112 can be configured to provide a variety of functions, including, for example, be utilized in the selective delivery of electrical power to the robot 106 and/or to control the movement of the robot 106 and/or the operation of other equipment that is mounted to the robot 106, including, for example, the end effector 108.

The controller 112 can take a variety of different forms, and can be configured to execute program instructions to perform tasks associated with operating robot 106, and moreover, to operate the robot 106 to perform various functions, such as, for example, but not limited to, tasks described herein. In one form, the controller(s) 112 is/are microprocessor based and the program instructions are in the form of software stored in one or more memories. However, it is alternatively contemplated that one or more of the controllers 112 and the program instructions executed thereby may be in the form of any combination of software, firmware and hardware, including state machines, and may reflect the output of discreet devices and/or integrated circuits, which may be co-located at a particular location or distributed across more than one location, including any digital and/or analog devices configured to achieve the same or similar results as a processor-based controller executing software or firmware based instructions. Operations, instructions, and/or commands determined and/or transmitted from the controller 112 can be based on one or more models stored in non-transient computer readable media in a controller 112, other computer, and/or memory that is accessible or in electrical communication with the controller 112. Further, according to certain embodiments, the controller 112 can be configured to dynamically control the movement of both the robot 106 itself, as well as the movement of other devices to which the robot 106 is mounted or coupled, and which can further displace or move the robot about at least a portions of the robot station 102, and thereby dynamically control at least the movement of the robot 106.

According to the illustrated embodiment, the controller 112 includes a data interface that can accept motion commands and provide actual motion data. Optionally, the robot station 102 can also include one or more sensors 114 that can be used in connection with observing the robot station 102, including the robot 106 and workpieces or parts on which the robot 106 and/or end effector 108 are performing work. Examples of such sensors 114 can include imaging capturing devices, microphones, position sensors, proximity sensors, accelerometers, motion sensors, and/or force sensors, among other types of sensors and sensing devices. The sensors 114 can output data or information that is utilized in connection with providing input signals to the controller 112 that the controller 112 uses to control the robot 106 in the performance of work on the workpiece.

Additionally, according to certain embodiments, at least some of the sensors 114 may, or may not, be smart sensors such that have data processing capabilities. According to embodiments in which the sensor(s) 114 is/are, or includes, one or more smart sensors, the smart sensor(s) can be electrically coupled to the controller 112 such that data from, or processed by, the smart sensor(s) can be communicated to the controller 112. Alternatively, according to certain embodiments, the sensor(s) 114 may not be smart sensors, and thus may not have data processing capabilities. Thus, according to embodiments in which the sensor(s) 114 is/are, or includes sensors that are not smart sensors, the non-smart sensors can be electrically coupled to a computation member 116 that is adapted to process data or information outputted from the non-smart sensors. Alternatively, data or information outputted from the non-smart sensors, if any, can be outputted to the communication network or link 118 and processed by a management system 120 of the operator station 104, as discussed below in more detail.

The operator station 104 is configured to, in connection with communications to/with the robot station 102, provide an operator of the operator station 104 direct remote control of the robot 106 and attached processes from the operator station 104. According to the exemplary embodiment depicted in Figure 1, the operator station 104 can include at least one teleoperation member 122, one or more displays 124, and the management system 120. The at least one teleoperation member 122 can be structured to receive commands or other input information from the operator of the teleoperation member 122, including, but not limited to, commands provided through the physical engagement and/or movement of at least a portion of the teleoperation member 122 and/or operator. For example, according to certain embodiments, the teleoperation member 122 can be one or more joysticks, a stylus-type device, and/or a sensing device that can be manipulated or moved by the operator, or which can track movement of at least a portion of the teleoperation member 122 and/or body of the operator. Further, according to certain embodiments, the teleoperation member 122 can be, or include, a touch screen of the display 124. Such interaction between the operator and the teleoperation member 122 can, according to certain embodiments, be configured to translate certain movements or actions by the operator into continuous motion signals relating to the movement of the robot 106, such as, for example, position and/or speed signals. For example, according to certain embodiments in which the teleoperation member 122 is a joystick, movement of the joystick or a stick of the joystick can be converted to electronic signals indicative of the direction(s) or movement that are translated into corresponding similar movement of the robot 106 and/or a speed of movement of the robot 106.

According to certain embodiments, the teleoperation member 122 can include haptic capabilities and/or can be a haptic device, including, for example, a teleoperation member 122 device that experiences feedback in the form of vibrations sensed by the operator through the teleoperation member 122, among other sensory feedback to the operator, relating to forces experienced and/or encountered by the robot 106 and/or end effector 108. Alternatively, or additionally, the teleoperation member 122 can include haptic capabilities in which the teleoperation member 122 includes one or more tactile sensors that can measure or sense forces exerted on the teleoperation member 122 by the operator. Such forces can be translated into the movement or operation of the robot 106, including, for example, the force an end effector 108 used by the robot 106 exerting a corresponding force on the workpiece, such as a clamping, gripping, and/or striking force.

According to the illustrated embodiments, signals or information provided by the teleoperation member 122 based on movement, operation, and/or engagement of the operator with the teleoperation member 122 can be electrically communicated to the management system 120. The management system 120 can be any type of computing device, such as, for example, a laptop, desktop computer, personal computer, programmable logic controller (PLC), or a mobile electronic device, among other computing devices, that includes a memory and a processor sufficient in size and operation to store and manipulate a database and one or more applications for at least communicating with the robot station 102 via the communication network or link 118. In certain embodiments, the management system 120 can include a connecting device that may communicate with the communication network or link 118 and/or robot station 102 via an Ethernet WAN/LAN connection. In certain other embodiments, the management system 120 can include a web server, or web portal, and/or may communicate with the communication network or link 118 and/or robot station 102 via the internet.

In addition to processing data provided from the operator station 104, such as, for example, information outputted by the teleoperation member 122, the management system 120 can also process information provided from the robot station 102 and/or the communication network or link 118. For example, the management system 120 can process information provided by the sensor(s) 114, the robot 106, the controller 112, and/or the computation member 116. According to certain embodiments, such information provided to the management system 120 from the robot station 102 and/or the communication network or link 118 may be processed by the management system 120 in a manner that provides a visual indication or information regarding the operation of the robot 106 and/or work on the workpiece that can be displayed on the display 124, either as a captured image(s) and/or as a digital representation. Further, the management system 120 may process information from the robot station 102 and/or the communication network or link 118 in a form that provides information for the operation of certain haptic capabilities of the teleoperation member 122.

A variety of different types of devices can be utilized as the display 124, including, for example one or more monitors or devices that include one or more monitors. According to certain embodiments, the display 124 can be a display 124 of the management system 120, such as, for example, a display of a PLC, laptop, or desktop computer. The display 124 can be configured to provide a visual indication of actual data about the robot and/or related processes, including, for example, data or information related to the motion, position, orientation, and/or operation of the robot 106 and/or data or information relating to the workpiece.

The operator station 104 can also include a variety of different types of safety enabling devices 126. According to certain embodiments, the safety enabling device(s) 126 can be separate and distinct from the teleoperation member 122, such as, for example, a three position switch that can accommodate an emergency shutdown of the robot 106 or other portions of the robot station 102. Moreover, according to certain embodiments, the safety enabling device(s) 126 can be configured to facilitate a shutdown of attached processes, such as, for example, via disabling power to the robot 106 or other devices associated with the operation or function of the robot station 102. According to certain embodiments, the safety enabling devices 126 can be coupled to the management system 120 or bypass the management system 120.

The communication network or link 118 can be structured to connect the robot station 102 to the operator station 104. More specifically, according to certain embodiments, the communication network or link 118 can be structured to facilitate a communicative connection between the management system 120 of the operator station 104 and the controller 112 of the robot station 102. According to the illustrated embodiment, the communication network or link 118 comprises one or more communication links 128 (Comm link_{1-N} in Figure 1). Additionally, the system 100 can be operated to maintain a relatively reliable real-time communication link, via use of the communication network or link 118, between the operator station 104 and the remotely located robot station 102. Thus, according to certain embodiments, the system 100 can changes parameters of the communication link 128, including, for example, the selection of the utilized communication links 128, as well as the motion of the robot 106 based on the currently available data rate and/or transmission time of the communication links 128.

The communication network or link 118 can be structured in a variety of different manners. The communication network or link 118 between the operator station 104 and the robot station 102 can be realized through the use of one or more of a variety of different types of communication technologies, including, but not limited to, via the use of fiber-optic, radio, cable, or wireless based technologies on similar or different types and layers of data protocols. For example, according to certain embodiments, the communication network or link 118 can utilize an ethernet installation(s) with wireless local area network (WLAN), local area network (LAN), cellular data network, Bluetooth, ZigBee, point-to-point radio systems, laser-optical systems, and/or satellite communication links, among other wireless industrial links or communication protocols.

According to certain embodiments, the communication network or link 118 can be configured based on the physical distance between one or more of the at least one robot station 102 and one or more of the at least one operator station 104. For example, according to certain embodiments, the operator station 104 may be in relatively close proximity to the robot station 102, such as, for example, being on opposing sides of a barrier, including, for example, a sheet or wall. Moreover, according to certain embodiments, the operator station 104 and the robot station 102 can be in the same facility or complex of facilities. According to such embodiments, the operator station 104 may be generally directly coupled to the robot station 102 and/or utilize a shared networked communication system of the common facility(ies), among other manners of communication. Alternatively, according to other embodiments, the operator station 104 may be at a remote location relative to the robot station 102, such as, for example, being in a different town, state, or country, among other distances. In such situations, the communication network or link 118 can have a configuration that accommodates such relatively long-distance communications between the operator station 104 and the robot station 102. For example, according to certain embodiments, the communication network or link 118 may, for example, include use of the internet or other network structure. However, the above examples are not necessarily exclusive based on the location of the relative locations of the operator station 104 and the robot station 102. Moreover, the above examples describing embodiments that can be utilized when the operator station 104 is relatively remote to the robot station 102 can also be used when the operator station 104 and the robot station 102 are in relatively close proximity to each other, and, conversely, the above examples describing embodiments that can be utilized when the operator station 104 is relatively close to the robot station 102 can also be used when the operator station 104 and the robot station 102 are in relatively remote proximity to each other.

Figure 2 illustrates a portion of a robot of a robot station performing exemplary work on a workpiece. In the depicted embodiment, a sensor 114 in the form of a force sensor 130 is positioned between the end effector 108 and a subpart 132 that the robot 106 is assembling to a main part 134. According to the illustrated embodiment, the force sensor 130 can be integrated with haptic feedback capabilities of the teleoperation member 122. Moreover, the force sensor 130 can be used to detect and/or determine forces being experienced by, and/or imparted onto, the end effector 108 and/or robot 106 and can directly or indirectly provide corresponding information or data to the controller 112, the computation member 116 of the robot system 102, and/or the management system 120 of the operator station 104. The controller 112, computation member 116, and/or the management system 120 can utilize such data or related information to provide a signal to the teleoperation member 122 that is used to provide a visual, auditory, or physical signal to the operator of the teleoperation member 122 that may provide an indication of the relative degree of the force sensed by the force sensor 130. Moreover, the degree of haptic feedback provided by the teleoperation member 122, such as whether the force feedback is relatively large or small, may provide an indication of the extent of force sensed by the force sensor 130. For example, according to certain embodiments in which the teleoperation member 122 includes a display, a position(s) of an image and/or clarity of an image on the display may adjusted, with the degree or frequency of such adjustments corresponding to the degree of the force sensed by the force sensor 130. Further, according to certain embodiments, the haptic feedback of the teleoperation member 122 can be provided by an audible sound, the pitch, frequency, and/or volume of which can correspond to the degree of the force sensed by the force sensor 130. Further, according to certain embodiments, the haptic feedback of the teleoperation member 122 is provided by movement and/or resistance to movement of the teleoperation member 122, such as, for example, vibration(s) or degree of resistance to movement of a haptic joystick of the teleoperation member 122. Further, the extent and/or duration of such movement or resistance can correspond to the degree of the force sensed by the force sensor 130.

Referencing the exemplary embodiments depicted in Figures 1 and 2, during operation of the system 100, an operator maneuvers the movement of at least a portion of the robot 106, such as, for example an arm 110 and/or end effector 108, via operation of the teleoperation member 122, such as, for example, by operating a haptic joystick, among other types of teleoperation members 122. According to the illustrated embodiment, the robot 106 may have a grasp on the illustrated subpart 132 as the main part 134 to which the subpart 132 is to be assembled or otherwise attached moves or otherwise is positioned into the workspace of the robot 106. As the robot 106 is maneuvered by operation of the teleoperation member 122, and the subpart 132 is moved into contact with the main part 134, at least a portion of the forces generated by such contact between the subpart 132 and main part 134 are sensed by the force sensor 130. Force feedback information or data relating to, or indicative of, the forces sensed by the force sensor 130 can be communicated to the operator via the haptic capabilities of the teleoperation member 122, as previously discussed. For example, as mentioned above, according to certain embodiments, feedback of such forces can be communicated to the operator of the operator station 104 using a teleoperation member 122 in the form of vibrations in the joystick and/or by commanding the joystick to provide resistance to the operable movement of the joystick in the direction of those sensed forces. Such haptic feedback can provide the operator of the operator station 104 a sense or indication of what the robot 106 is experiencing during the operation of assembling the subpart 132 with the main part 134.

According to certain embodiments, the management system 120 can be configured to display on the display 124 a graphical user interface 136 (GUI) that can correspond to an orientation or position of one or more of the robot 106, end effector 108, and/or workpiece, such as the subpart 132 and the main part 134. According to certain embodiments, the GUI 136 can be software or an application that is stored and/or utilized by the management system 120 and displayed on the display 124. Further, according to certain embodiments, the GUI 136 may, or may not, be fully integrated with the operation of the teleoperation member 122, including, for example, a teleoperation member 122 in the form of a haptic joystick. For example, according to certain embodiments, the GUI 136 may provide a digital representation or image of one or more of the robot 106, end effector 108, and/or workpiece, but not of the teleoperation member 122. However, according to such embodiments, the movement or operation of the teleoperation member 122 may still be indicated by an indication of the movement relating to the robot 106 and/or workpiece that is displayed on the display 124.

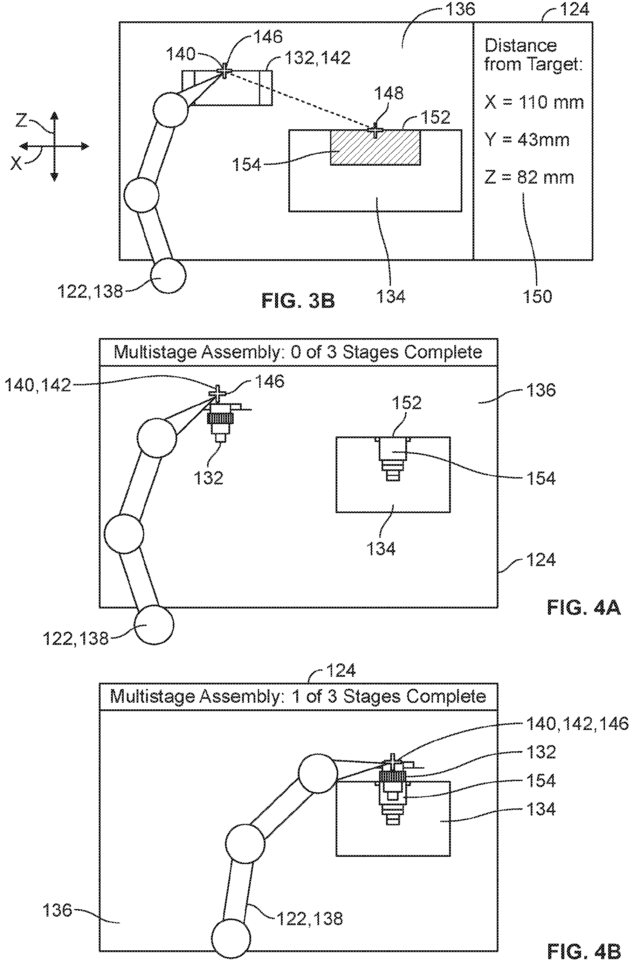

Figures 3A and 3B illustrate an exemplary graphical user interface 136 (GUI), as shown on the display 124, that is fully integrated with the operation of a teleoperation member 122 in the form of a haptic joystick 138. In the depicted embodiment, the subpart 132 is being held by the robot 106. According to such an embodiment, a tool center point (TCP) of the robot 106 and/or the haptic joystick 138 can be defined as a center point, among other points, relative to a location of the subpart 132 that is being held, grasped, or otherwise coupled to the robot 106 and/or the end effector 108 that is coupled to the robot 106. Thus, the movement of the selected TCP of the robot 106 can generally be defined by the movement of the subpart 132 that is held, grasped, or otherwise coupled to the robot 106. The TCP of the robot 106 can also be correlated to a coordinate system of the GUI 136, such as, for example, a three dimensional coordinate system used by the GUI 136 to identify the relative positions and/or orientations of the components of the robot station 102, such as, the robot 106, and the workpieces that are displayed by the GUI 136. Such correlation of the coordinate system of the GUI 136 to the TCP of the robot 106 can, depending on the embodiment, be in two dimensional and/or three dimensional systems.

According to certain embodiments, correlating the TCP of the robot 106 to the coordinate system of the GUI 136 based on the location and/or orientation of the subpart 132 that is being held, grasped, or otherwise coupled to the robot 106 can be attained in a variety of manners. For example, such correlation can include importing, downloading, or otherwise providing to the management system 120 and/or the GUI 136, the geometric shape of the subpart 132. The geometric shape of the subpart 132 can be obtained in a variety of different manners, including, for example, via information provided by a computer aided design (CAD) program and/or three-dimensional scanning techniques, among other manners of obtaining geometric information of the subpart 132. Such correlation can also include operating the robot 106 in a manner that the robot 106 or an end effector 108 coupled or mounted to the robot 106 touches three non-collinear points on the subpart 132 or representative subpart 132 in connection with defining the part coordinate frame transformation to robot base coordinate frame. Further, such touching can be used to ensure the locations and orientation of the subpart 132 are accurately represented in the GUI 136. According to such an approach, once the subpart 132 is gripped, held, or otherwise operably coupled by/to the robot 106, the position and/or orientation of the subpart 132 is known as such a position and/or orientation would stay in a known relationship to the end effector 108 of the robot 106 until the subpart 132 is released from the robot 106 and/or end effector 108.

Additionally, as indicated by Figure 3A, unlike traditional systems that typically calibrate the work space of the haptic joystick 138 to the work space of the robot 106, the GUI 136 can also correlate the orientation and/or manipulation of the illustrated haptic joystick 138 to the coordinate system of the GUI 136. For example, according to certain embodiments, a calibration step can be implemented by at least the GUI 136 and/or management system 120 using information relating to the operation haptic joystick 138 that at least facilitates the correlating of the TCP 140 or work space of the haptic joystick 138 to the coordinate system of the GUI 136. According to certain embodiments, with the haptic joystick 138 calibrated to the coordinate system of the GUI 136, the operation or jogging of the haptic joystick 138 can be correlated to a movement of a particular identified location of the robot station 102, as depicted by a visual indication shown on the GUI 136. For example, referencing Figures 4A-4D, the position or orientation of the haptic joystick 138 can be synchronized on the GUI 136 to the location of a representation of the TCP of the robot 106 that is indicated or displayed on the GUI 136 by a first reference indicator 142. Moreover, according to such an embodiment, the location and/or orientation of a reference position on the haptic joystick 138, in this example the tip 144 of the haptic joystick 138, is synchronized to generally correspond to a reference location of the robot 106 and/or subpart 132 that can be visually depicted by the first reference indicator 142 that is displayed by the GUI 136. Accordingly, adjustments in the relative position and/or orientation of the haptic joystick 138 as the haptic joystick 138 is operably manipulated or jogged can be depicted by the GUI 136 in terms of movement of the first reference indicator 142 on the GUI 136. Thus, for example, Figures 4A-4D depict an example of the movement or jogging of the haptic joystick 138, the corresponding movement or changes in location of the first and second reference indicators 142, 146 as well as the corresponding position and/or orientation adjustments of the digital representation of the GUI 136 of the subpart 132 relative to the main part 134 during subsequent stages of assembly of the subpart 132 to the main part 134. Further, Figures 3A-3B depicted the orientation of one embodiment of the haptic joystick 138, as well the digital representation of the subpart 132 and main part 134 along two different combinations of axes of the GUI 136 (identified as the "X", "Y", and "Z" axes in Figures 3A and/or 3B) that correspond to the location and/or orientation of the first reference indicator 142 in the coordinate system of the GUI 136.

According to certain embodiments, the GUI 136 can be configured to accommodate adjustments by the operator of the orientation of the views and/or representations of the jogging provided by the GUI 136 of the robot 106, subpart 132, and/or main part 134, as depicted by the GUI 136 on the display 124. For example, Figure 3A illustrates, in addition to the haptic joystick 138, a top view of the relative positions and/or orientations of the subpart 132 and main part 134, as represented by the GUI 136 on the display 124. According to such an embodiment, the GUI 136 can provide a view in a two of the three coordinate axes, as indicated, for example, by the "X" and "Y" coordinate axes shown in Figure 3A. Alternatively, the operator can adjust the view provided by the GUI 136 on the display 124, such as, for example, to depict a side view of the relative positions and/or orientations of the subpart 132 and main part 134, and moreover the relative positions and/or orientations of the subpart 132 and main part 134 along a different combination of coordinate axes, namely the "X" and "Z" axes, as shown in Figure 3B. Thus, for example, the ability to adjust views may at least assist in the maneuvering of the robot 106 and/or subpart 132 along different axes, such as, for example, Figure 3B potentially providing a clearer indication of the relative positions, orientations, and/or displacement along the "Z" axes than Figure 3A. Alternatively, the GUI 136 and display 124 can be adjusted or configured to provide views along all three axes, including, but not limited to, three dimensional views.

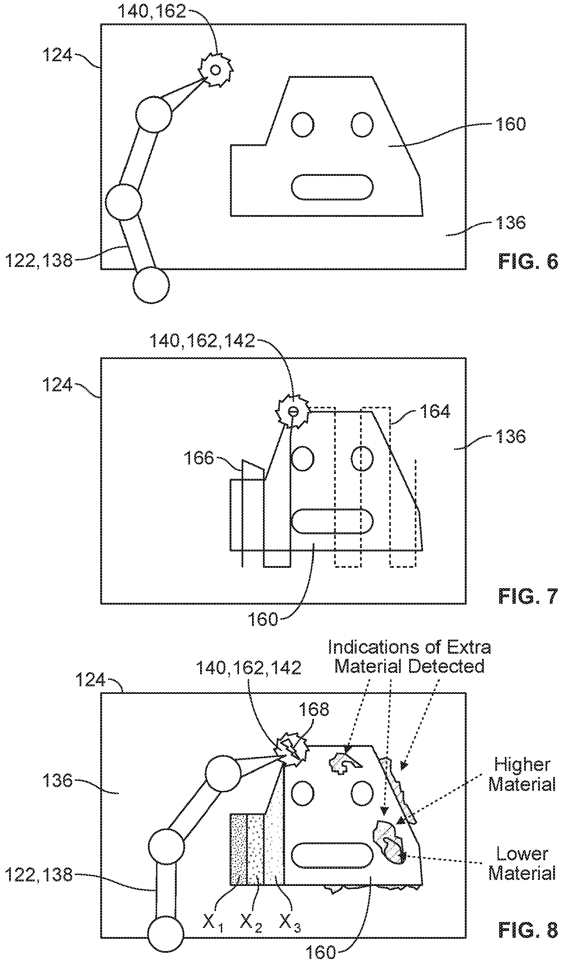

Additionally, as indicated by Figure 3B, the GUI 136 can also be configured to provide information regarding the relative distances between a second reference indicator 146, such as, for example, a reference location of the robot 106, subpart 132, and/or end effector 108, relative to a target indicator 148, such as, for example, a target location of or around the main part 134. For example, as illustrated, the GUI 136 can include a legend 150 or other graphical indications or representations of the distance along one or more axes of the coordinate system of the GUI 136 between second reference location 146 and target location 148 of the subpart 132, main part 134, and/or certain components of the robot 106. For example, as shown in Figure 6, according to certain embodiments, the GUI 136 can display a distance along three axes of the GUI coordinate system of the distance between the second reference indicator 146, such as a TCP of the subpart 132 and/or robot 106, and the target indicator 148. The distance(s) depicted by the GUI 136 can correlate to one or more actual distance or reference distances.

The second reference and target locations 146, 148 can be selected, for example, by use of the operator manipulating or jogging the haptic joystick 138, or other input devices of the management system 120 and/or the operator station 104. For example, the management system 120 and/or the GUI 136 can accommodate the operator entering the second reference indicator 146 and/or target indicator 148 when the operator positions an visual indicator, as shown on the GUI 136, at such selected locations via manipulation of the haptic joystick 138 or the inputting of information via another input device of the management system 120. Alternatively, according to certain embodiments, the GUI 136 and/or management system 120 can have information of the geometric configurations of the main part 134 and subpart 132 such that when one of the second reference indicator 146 for the subpart 132 and the target indicator 148 of the main part 134 is selected, stored, or otherwise inputted or provided to the management system 120, the management system 120 and/or GUI 136 can determine the corresponding second reference indicator 146 for the subpart 132 and the target indicator 148 of the main part 134. Further, the selected or determined second reference and target locations 146, 148 can be stored, assigned, recorded, or otherwise noted by the management system 120, including, for example, in the memory, and/or the software or application associated with the GUI 136.

A variety of locations can be selected as the second reference and target locations 146, 148. For example, in the embodiment illustrated in Figure 3B, the target indicator 148 is depicted as being at an inlet 152 of the cavity 154 of the main part 134 that is to receive insertion of at least a portion of the subpart 132. Further, as shown in Figure 3B, according to such an example, the second reference indicator 146 of the subpart 132 can be an upper portion of the subpart 132 that, when the subpart 132 and main part 134 are assembled together, is positioned at the inlet 152 of the cavity 154, and moreover, is positioned at the target indicator 148, when the subpart 132 is assembled to the main part 134. However, other locations of the cavity 154 or main part 134 can be selected as the target indicator 148. Further, according to certain embodiments, a plurality of second reference and target locations 146, 148 can be selected or used, such as different locations along a path of travel of the subpart 132 and/or positions and orientations that correspond to the final position of different parts or portions of the subpart 132 when the subpart is assembled to the main part 134.

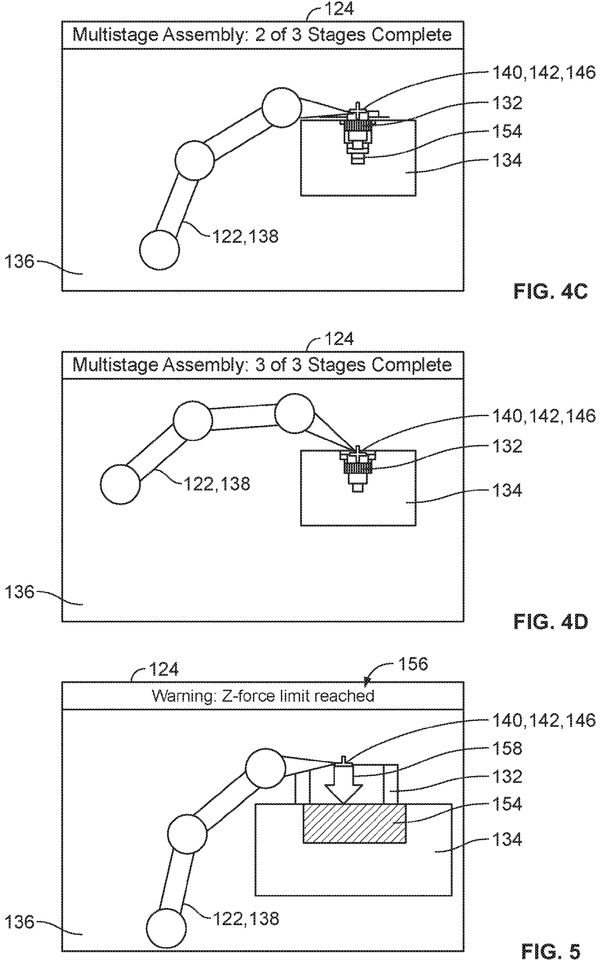

Referencing Figures 4A-4D, for multi-stage assemblies, the GUI 136 can be structured to graphically depict on the display 124, and/or provide a textual or graphical indication(s), of the current stage of the assembly of the subpart 132 to the main part 134. Further, as previously discussed, Figures 4A-4D further demonstrate the haptic joystick 138 being synchronized to the GUI 136 such that the movement or jogging of the joystick 138 correlates to the GUI 136 depicting the movement of a first reference indicator 142 that corresponds to a particular location and/or orientation of the robot 106 and/or subpart 132. Further, in the illustrated embodiment, the first reference indicator 142 can be the same, or at the same location and/or orientation, as the previously discussed second reference indicator 146. As shown by the illustrated example, adjustments of the haptic joystick 138 can be correlated to the movement of the first reference indicator 142 and/or second reference indicator 146 as the subpart 132 is moved from a position that is not part of the multi-stage assemblies (Figure 4A), along the first two stage of assembly (Figures 4B and 4C), and eventually to a target indicator 148 that corresponds to the insertion of the subpart 132 into a cavity 154 of the main part 134 at a final assembly stage (Figure 4D).

Referencing Figure 5, the GUI 136 can also be configured to provide a graphical and/or textual representation of force feedback information and/or force limits experienced at least as the haptic joystick 138 is manipulated in a manner that correlates to, at the robot station 102, the assembly of the subpart 132 to the main part 134. Such force feedback can be based, at least in part, on information provided by one or more sensors 114, including, for example, information provided by the force sensor(s) 130, as evaluated or processed by the sensor 114, 130 itself, the computation member 116, the management system 120, or other components of the robotic and/or operator stations 102, 104. For example, Figure 5 illustrates an example of the GUI 136 providing both a textual message 156 and graphical warning indicator 158 of a force warning. Further, according to certain embodiments, the GUI 136 may display an indication of the direction and/or the basis and/or factor of the basis of the force warning. For example, as shown in Figure 5, the textual message 156 can provide an indication of a direction associated with the force warning, such as, for example, an indication that the force limit is being reached along the "Z" axis. Similarly, the graphical warning indicator 158 of the force warning can also be configured to provide an indication of the nature of the force warning, such as, for example, providing an arrow indicating a direction associated with the force warning, such as, for example, pointing generally in the "Z" direction. Such a textual message 156 and/or graphical warning indicator 158 can, for example, assist in guiding the operator of the operator station 104 in aligning the subpart 132 to the main part 134 and/or a notification of the existence of subtle misalignment of the parts 132, 134 or a jamming situation. While Figure 5 is illustrated in terms of the textual message 156 and graphical warning indicator 158 providing warnings relating to force feedback, the GUI 136, management system 120, and/or computation member 116 can be configured to use the textual message 156 and graphical warning indicator 158 for providing information in addition to, or, alternatively, instead of, force feedback information, including, for example, information regarding a detected defect in the subpart 132 and/or an improper position, orientation, or grip of the robot 106 relative to the subpart 132, among other information.

Figure 6 illustrates an exemplary side view of a digital representation of a workpiece 160 by a GUI 136 on a display 124, as well as a location of a TCP 140 of a haptic joystick 138, as correlated with a coordinate system of a GUI 136, rather than being calibrated to the work space of the robot 106. Further, in the depicted example, the location of a TCP 140 of the depicted teleoperation member 122, moreover the haptic joystick 138, is shown as correlating to the TCP 162 of the robot 106, as correlated to the coordinate system of the GUI 136. More specifically, calibration of the TCP 140 of the depicted teleoperation member 122, and moreover of the illustrated haptic joystick 138, can be utilized as an additional calibration step that involves correlating the work space of the haptic joystick 138, such as the range of operation of the joystick 138, to the coordinate system of the GUI 136. In such a situation, with the work space of the haptic joystick 138 calibrated to the coordinate system of the GUI 136, as the operator manipulates the haptic joystick 138 about the workspace of the joystick 138, the movement of the joystick 138 and the resulting movement of the robot 106, as depicted by movement displayed by the GUI 136 on the display 124, can be synchronized.

Figure 7 illustrates an exemplary side view of a digital representation of a workpiece 160 by a GUI 136 on a display 124 that provides guidance in the form of a first path 164 the TCP 162 of the robot 106 is to travel during a work process on a workpiece. According to the depicted example, the robot 106 can be operating a cutting device in connection with the removal of material from the workpiece 160, among other types of possible work processes. The first path 164 can correspond to a predetermined path the TCP 162 of the robot 106, such as, for example a path the robot 106 is planned or selected to take either before or during the operation of the robot 106, and can be depicted by the GUI 136 on the display 124 in a variety of manners. For example, according to the depicted example, the first path 164 can be represented by broken or dashed lines, among other line formats, or other graphical or textual representations. Further, according to certain embodiments, the GUI 136 can also display on the display 124 an indication of second path 166 that corresponds to a tracked path traveled by the TCP 162 and/or the portion of the first path 164 that the TCP 162 has already generally traveled relative to the workpiece 160. The second path 166 can be depicted in a manner that distinguishes the second path 166 from the first path 164, such as, for example, via use of different line style(s) and/or color(s). Further, according to certain embodiments, during use of the robot 106, the second path 166 can be displayed alongside or over the corresponding portion of the first path 164 and/or can replace that generally traveled portion of the first path 164. However, according to certain embodiments, the extent the TCP 162 of the robot 106 follows the first path 164 can vary, as, for example, variances associated with differences in the amount of material that may be removed at different locations of the workpiece 160. Additionally, the GUI 136 can also display a first reference indicator 142 that corresponds to the current location of the TCP 162 of the robot 106.

The teleoperation robotic system 100 can also be configured to provide a variety of other types of information relating to the work processed done, or planned to be done, on a workpiece 160 by a teleoperated robot 106. A variety of different information provided from a variety of sources of the robot station 102 and/or operation station 104 can be depicted on by the GUI 136 on the display 124. For example, referencing Figure 8, as previously discussed, the position and/or orientation of the TCP 162 of the robot 106 can be depicted on the GUI 136 by a first reference indicator 142. Further, the first reference indicator 142 on the GUI 136 can be depicted in a variety of shapes, colors, and sizes, such as, for example, in the shape of a cutting blade. Additionally, as the teleoperation member 122 is manipulated by an operator, and the corresponding position and/or orientation of the robot 106 is adjusted, the change in position and/or orientation of the TCP 162 of the robot 106, and thus the corresponding location of the first reference indicator 142 on the GUI 136, can be determined by the management system 120 via the correlation or synchronization between at least the teleoperation member 122, the location of the TCP 162 of the robot 106, the coordinate system of the GUI 136, and/or the location and inputted geometric features of the workpiece 160. Additionally, the computation member 116 and/or management system 120 may receive positional and/or orientation information for the robot 106 and/or the TCP 162 of the robot 106 from one or more of the sensors 114, such as, for example, a position sensor, accelerometer, and/or a captured image(s) through the use of a vision system, such, as, for example, a vision system having one or more cameras or imaging capturing devices, among other types of sensors. Such information may provide, or be used by the computation member 116 and/or management system 120 to determine, the position and/or orientation of the robot 106 and/or the TCP 162 of the robot 106.

Additionally, one or more characteristics of the first reference indicator 142 displayed on the GUI 136 can change based on changes in the certain aspects of the location or operation of the robot 106, TCP 162 of the robot 106, and/or the end effector 108. For example, according to certain embodiments, the visual appearance of the first reference indicator 142 in the GUI 136 can change based on changes in vertical and/or horizontal positions of the TCP 162 of the robot 106 relative to the workpiece 160 or other aspects of the robot station 102. For example, a size, shape, and/or color of the first reference indicator 142 may change as the TCP 162 of the robot 106 is moved to different heights, lengths, or locations of the workpiece 160. Additionally, according to certain embodiments, operation indicia 168 can be displayed on the GUI 136 to indicate states of operation of the end effector 108, such as indicating when the end effector 108 is in an off state. For example referencing Figure 8, operation indicia 168 in the form of a lightning bolt can be superimposed over the first reference indicator 142 when the end effector 108 is being operated, such as, for example, when an end effector 108 in the form of a cutting or milling tool, among other tools or devices, is performing work on the workpiece 160.

Similarly, one or more characteristics of the workpiece 160 digitally reproduced or otherwise displayed by the GUI 136 on the display 124 can change based on work performed by the robot 106, and more specifically, the robot 106 using the end effector 108. For example, according to certain embodiments, a portion of the workpiece 160 depicted or displayed by the GUI 136 can change in color or shape, or have other visual indicators superimposed on the depiction of the workpiece 160 to indicate the location and/or nature of work to be, or already performed, on the workpiece 160. For example, referencing Figure 8, depth of a cutting or milling operation on the workpiece 160 performed using the robot 106 and/or end effector 108 can be indicated by the addition, or changes, in color in the general portion, area, or general location of the work, among other graphical or textual indicators. For example, in Figure 8, a first region ("X₁"), a second region ("X₂"), and a third region ("X₃") shown in the workpiece 160 can correspond to differences in depth of cutting or milling operations in the workpiece 160 by operation of the end effector 108 of the robot 106. An indication of such regions (X₁, X₂, X₃) can be provided by a variety of manners, including by coloring sections of workpiece 160 depicted by the GUI136 to indicate those depths, or lines superimposed in the depicted image, among other visual indications. Further, the depth of such cuts or milling operations into the workpiece 160 can be determined in a variety of manners, including, for example, by the management system 120 via the correlation or synchronization between at least the teleoperation member 122, the location of the TCP 162 of the robot 106, the coordinate system of the GUI 136, and/or the location and inputted geometric features of the workpiece 160. Additionally, the computation member 116 and/or management system 120 may receive positional and/or orientation information for the robot 106 and/or the TCP 162 of the robot 106 from one or more of the sensors 114, such as, for example, a position sensor, accelerometer, and/or a captured image(s) form one or more cameras, among other types of sensors 114 as well as and/or information of the location and geometric features of the workpiece 160 that allow the management system 120 and/or computation member 116 to determine such information.

Referencing Figure 8, according to certain embodiments, the sensors 114 of the robot station 102 can also include one or imaging devices that are configured to provide information relating to a three dimensional image of a least a portion of the workpiece 160. Such information obtained by the sensor(s) 114 can be communicated to the computation member 116 and/or management system 120. Further, according to certain embodiments, such information from the sensor(s) 114 can be compared base geometrical information for such workpieces in connection with determining any apparent discrepancies between the scanned workpiece 160 and reference dimensions for such workpieces. Such comparisons may assist in identifying the presence, and location in terms of the coordinate system of at least the GUI 136, of potential defects or discrepancies in the in the scanned workpiece 160, such as, for example, locations on the workpiece 160 where excess or higher material is present and/or areas missing, or having lower, material. The presence of such defects or discrepancies can, via correlation to at least the coordinate system of the GUI 136, as well as the general correlation of the workpiece 160 to the coordinate system of the GUI 136, be depicted on the GUI 136. The operator at the operator station 104 may then manipulate teleoperation member 122 so as to maneuver the robot 106 to a location at which the end effector 108 can perform work on the workpiece 160 to address such defects or discrepancies in/on the workpiece 160.

While, for purposes of illustration, embodiments herein discuss tracking the location of the TCP 162 of the robot 106, it is understood that other locations in the robot station 102 can similarly be tracked, and features described herein can similarly apply to those other tracked locations or positions, including, for example, positions and/or orientation relating to the end effector 108, workpiece 160, and/or other portions of the robot 106.

Additionally, according to certain embodiments, digital representations provided by the GUI 136, such as, but not limited to, the TCP 162 of the robot 106, the first path 164 (or path guidance), the second path 166 (or path history), the amount of material removed from the workpiece 160, the depth of cut or milling into the workpiece 160, among other process information, can overlay video images displayed on the display 124, such as, for example, video images captured by an image capturing device, such as a camera, in the robot station 102. Additionally, the digital representations provided by the GUI 136 can be generated in three-dimensional view and overlaid on three-dimensional view video and three-dimensional view point cloud from the cameras. Further, the digital representations provided by the GUI 136 of the workpiece 160 can be generated based on different viewpoints and scaled according to the pan, tilt and/or zoom of the image capturing device, the selection or type of image capturing device, and/or the rotation, pan and zoom of the view in the GUI 136. Multiple image capturing devices can also be used in order to provide relatively good visual accessibility for the robot 106 working on different areas of the workpiece 160.

According to certain embodiments, the teleoperation robotic system 100 can be configured to accommodate selection of certain operations and procedures on the workpiece 160 via point and click capabilities using the teleoperation member 122. For example, according to certain embodiments, the teleoperation member 122 may select an area of the workpiece 160 that is to have material removed by operation of the robot 106 and the associated end effector 108. According to such an embodiment, the teleoperation member 122 may be operated to select the area that is to be subjected to material removal, and the management system 120 and/or computation member 116 may be structured to translate such a selection into commands for the robot 106 and/or end effector 108 that can include guiding the movement of the robot 106 and operation of the end effector 108 in a manner that results in the removal of the selected material.

Such point and click capabilities can also be used by the teleoperation member 122 to select or define a path of travel, such as the first path 164, that is to be taken by the robot 106 and/or end effector 108 in performing work on the workpiece 160. Further, such functionality can cause the teleoperation robotic system 100 to switch from a teleoperation mode in which commands or instructions are being provided by at least by the operation of the teleoperation member 122, to a program mode, wherein the management system 120 and/or computation member 116 translate those commands from the teleoperation mode to instructions and signals used by the robot 106 and/or end effector 108 to carry out the commands or instructions from the teleoperation mode. Further, such point and click functionality can also accommodate editing of virtual constraints, such as, for example, force and speed limits, among others, based on the digital representations of the GUI 136, such as for example, representations regarding the amount of material removed and surface quality of the workpiece 160.

As can be appreciated, coordinating the location of the teleoperation member 122 and display of the workpiece(s) 160 on which the robot 106 or end effector 108 is performing can make the teleoperated assembly operation more intuitive, especially when the operator cannot see the workpiece(s) 160 via a direct line of sight. Further, such a system 100 can also allow the operator to better understand the operation of the robot 106 and/or end effector 108 and the progress in performing associated work on the workpiece 160. As can be also appreciated, additional information, such as, for example, assembly stages and assembly forces, among other information, can be part of the information provided by the GUI 136, which can further improve the usability of the system 100.

## Claims

1. A system for providing a graphic user interface (136) for a teleoperation robotic system (100) having a teleoperation member (122) at an operator station (104) and a robot (106) at a robot station (102), the teleoperation member (122) being operated by an operator for maneuvering the movement of at least a portion of the robot (106), the system comprising:
a computing device (120) having at least one processor, the computing device (120) **characterised by** being configured to:
receive a first input information having a robot indicator (142), the robot indicator (142) indicating at least one of a position or an orientation of at least a portion of the robot (106) on the graphic user interface (136), the robot indicator (142) being at least one of a position or orientation a tool center point (162) of an end effector (108) of the robot (106), the first input information including information detected by one or more sensors (114) in the robot station (102);
calibrate the robot indicator (142), i.e. at least one of a position or orientation a tool center point (162) of an end effector (108) of the robot (106), to a coordinate system of the graphic user interface (136) to attain a calibrated robot indicator;
receive a second input information having a teleoperation member indicator (144), the teleoperation member indicator (144) indicating at least one of a position or an orientation of the teleoperation member (122) on the graphic user interface (136), the teleoperation member indicator (144) being at least one of a position or an orientation of a tool center point (140) of the teleoperation member (122);
calibrate the teleoperation member indicator (144), i.e. at least one of the position or the orientation of the tool center point (140) of the teleoperation member (122), to the coordinate system of the graphic user interface (136) to attain a calibrated teleoperation member indicator;
synchronize the calibrated teleoperation member indicator, i.e. at least one of a calibrated position or orientation of the tool center point (140) of the teleoperation member (122), to a location of the representation of the calibrated robot indicator, i.e. of the at least one of a calibrated position or orientation of the tool center point (162) of the end effector (108) of the robot (106), that is visually depicted on the graphic user interface (136); and
display, on a display (124), the graphical user interface (136), the graphical user interface (136) configured to display a movement in the robot station (102) that is associated with at least a movement of the robot (106) that is correlated to the operation of the teleoperation member (122).

2. The system (100) of claim 1, further including the display (124) and a communication network (118), the communication network (118) having one or more communication links (128) structured to communicatively couple the robot station (102) to the operator station (104), the one or more communication links (128) configured to communicate at least one of the first input information from the robot station (102) and the second input information from the operator station (104) to the computing device (120).

3. The system (100) of claims 1 or 2, further including the teleoperation member (122).

4. The system (100) of claims 1 or 2, further including the teleoperation member (122), and wherein the teleoperation member (122) is a haptic joystick (138).

5. The system (100) of any preceding claim, wherein the robot indicator (142) represents at least one of a portion or orientation of a tool center point (162) of the robot (106).

6. The system (100) of any preceding claim, wherein the computing device (120) is further configured to correlate an inputted geometric shape of a workpiece (160) in the robot station (102) to the coordinate system of the graphic user interface (136), and further wherein the computing device (120) is configured to synchronize at least one of a position and an orientation of the workpiece (160) to the calibrated robot indicator.

7. The system (100) of claim 6, further including the one or more sensors (114), wherein the one or more sensors (114) detect information relating to one or more geometric characteristics of the workpiece (160).

8. The system (100) of claim 7, wherein the computing device (120) is configured to determine the presence of one or more discrepancies between the workpiece (160) and the inputted geometric shape, and wherein the graphic user interface (136) is adapted to visually depict at least one of the determined one or more discrepancies.

9. The system (100) of claim 8, wherein the one or more discrepancies includes at least one of a difference in material quantity, geometric shape, or a dimensional size.

10. The system (100) of claim 9, wherein the one or more sensors (114) include a vision system adapted to detect the one or more geometric characteristics of the workpiece (160).

11. The system (100) of any preceding claim, wherein the computing device (120) is further configured to:
receive a third input information from a force sensor (130) coupled to the robot (106);
compare the received third input information to a force threshold value; and
display on the graphical user interface (136) on the display at least an indication of the third input information.

12. The system (100) of claim 11, wherein the computing device (120) is further configured to display on the graphical user interface (136) an indication of at least one of the third input information exceeding the force threshold value, and a force direction for the third input information that is correlated by the computing device (120) to the coordinate system of the graphic user interface (136).

13. The system (100) of any preceding claim, wherein the computing device (120) is configured to display on the graphical user interface (136) a first path of travel and a second path of travel, the first path of travel corresponding to a predetermined path to be traveled to preform work on the workpiece (160), the second path of travel corresponding to a tracked path of travel taken while work was performed on the workpiece (160) by operation of the robot (106).

14. The system (100) of any preceding claim, wherein the end effector (108) is coupled or mounted to the robot (106), the robot (106) having six degrees of freedom.

## Patentansprüche

1. System zum Bereitstellen einer grafischen Benutzerschnittstelle (136) für ein fernbedientes Robotersystem (100), das ein Fernbedienungselement (122) an einer Bedienstation (104) und einen Roboter (106) an einer Roboterstation (102) aufweist, wobei das Fernbedienungselement (122) von einem Bediener bedient wird, um die Bewegung mindestens eines Teils des Roboters (106) zu manövrieren, wobei das System umfasst:
eine Computervorrichtung (120), die mindestens einen Prozessor aufweist, wobei die Computervorrichtung (120) **dadurch gekennzeichnet ist, dass** sie konfiguriert ist zum:
Empfangen einer ersten Eingabeinformation, die einen Robotorindikator (142) aufweist, wobei der Roboterindikator (142) mindesten eine von einer Position oder einer Ausrichtung mindestens eines Teils des Roboters (106) an der grafischen Benutzerschnittstelle (136) angibt, wobei der Roboterindikator (142) mindestens eine von einer Position oder einer Ausrichtung eines Werkzeugmittelpunktes (162) eines Endeffektors (108) des Roboters (106) ist, wobei die erste Eingabeinformation Informationen umfassen, die von einem oder mehreren Sensoren (114) in der Roboterstation (102) detektiert werden;
Kalibrieren des Roboterindikators (142), d. h. mindestens einer von einer Position oder einer Ausrichtung eines Werkzeugmittelpunktes (162) eines Endeffektors (108) des Roboters (106), auf ein Koordinatensystem der grafischen Benutzerschnittstelle (136), um einen kalibrierten Roboterindikator zu erlangen;
Empfangen einer zweiten Eingabeinformation, die einen Fernbedienungselementindikator (144) aufweist, wobei der Fernbedienungselementindikator (144) mindestens eine von einer Position oder einer Ausrichtung des Fernbedienungselements (122) an der grafischen Benutzerschnittstelle (136) angibt, wobei der Fernbedienungselementindikator (144) mindestens eine von einer Position oder einer Ausrichtung eines Werkzeugmittelpunktes (140) des Fernbedienungselements (122) ist;
Kalibrieren des Fernbedienungselementindikators (144), d. h. mindestens einer von der Position oder der Ausrichtung des Werkzeugmittelpunktes (140) des Fernbedienungselements (122), auf das Koordinatensystem der grafischen Benutzerschnittstelle (136), um einen kalibrierten Fernbedienungselementindikator zu erlangen;
Synchronisieren des kalibrierten Fernbedienungselementindikators, d. h. mindestens einer von einer kalibrierten Position oder Ausrichtung des Werkzeugmittelpunktes (140) des Fernbedienungselements (122), mit einem Standort der Darstellung des kalibrierten Roboterindikators, d. h. der mindestens einen von einer kalibrierten Position oder Ausrichtung des Werkzeugmittelpunktes (162) des Endeffektors (108) des Roboters (106), die an der grafischen Benutzerschnittstelle (136) visuell abgebildet ist; und
Anzeigen, an einer Anzeige (124), der grafischen Benutzerschnittstelle (136), wobei die grafische Benutzerschnittstelle (136) konfiguriert ist, um eine Bewegung in der Roboterstation (102) anzuzeigen, die mindestens einer Bewegung des Roboters (106) zugeordnet ist, die mit der Bedienung des Fernbedienungselements (122) korreliert.

2. System (100) nach Anspruch 1, ferner umfassend die Anzeige (124) und ein Kommunikationsnetzwerk (118), wobei das Kommunikationsnetzwerk (118) eine oder mehrere Kommunikationsverbindungen (128) aufweist, die strukturiert ist bzw. sind, um die Roboterstation (102) mit der Bedienstation (104) kommunikationsmäßig zu koppeln, wobei die eine oder die mehreren Kommunikationsverbindungen (128) konfiguriert ist bzw. sind, um mindestens eine von der ersten Eingabeinformation von der Roboterstation (102) und der zweiten Eingabeinformation von der Bedienstation (104) der Computervorrichtung (120) mitzuteilen.

3. System (100) nach Anspruch 1 oder 2, ferner umfassend das Fernbedienungselement (122).

4. System (100) nach Anspruch 1 oder 2, ferner umfassend das Fernbedienungselement (122), und wobei das Fernbedienungselement (122) ein haptischer Joystick (138) ist.

5. System (100) nach einem der vorhergehenden Ansprüche, wobei der Roboterindikator (142) mindestens eine von einer Position oder einer Ausrichtung eines Werkzeugmittelpunktes (162) des Roboters (106) angibt.

6. System (100) nach einem der vorhergehenden Ansprüche, wobei die Computervorrichtung (120) ferner konfiguriert ist, um eine eingegebene geometrische Form eines Werkstücks (160) in der Roboterstation (103) mit dem Koordinatensystem der grafischen Benutzerschnittstelle (136) zu korrelieren, und wobei die Computervorrichtung (120) ferner konfiguriert ist, um mindestens eine von einer Position und einer Ausrichtung des Werkstücks (160) mit dem kalibrierten Roboterindikator zu synchronisieren.

7. System (100) nach Anspruch 6, ferner umfassend den einen oder die mehreren Sensoren (114), wobei der eine oder die mehreren Sensoren (114) Informationen bezüglich eines oder mehrerer geometrischer Kennzeichen des Werkstücks (160) detektiert bzw. detektieren.

8. System (100) nach Anspruch 7, wobei die Computervorrichtung (120) konfiguriert ist, um das Vorliegen von einer oder mehreren Abweichungen zwischen dem Werkstück (160) und der eingegebenen geometrischen Form zu bestimmen, und wobei die grafische Benutzerschnittstelle (136) geeignet ist, um mindestens eine von der einen oder den mehreren Abweichungen visuell abzubilden.

9. System (100) nach Anspruch 8, wobei die eine oder die mehreren Abweichungen mindestens einen von einem Unterschied bei der Materialmenge, der geometrischen Form oder einer dimensionalen Größe umfassen.

10. System (100) nach Anspruch 9, wobei der eine oder die mehreren Sensoren (114) ein Sichtsystem umfasst bzw. umfassen, das geeignet ist, um das eine oder die mehreren geometrischen Kennzeichen des Werkstücks (160) zu detektieren.

11. System (100) nach einem der vorhergehenden Ansprüche, wobei die Computervorrichtung (120) ferner konfiguriert ist zum:
Empfangen einer dritten Eingabeinformation von einem Kraftsensor (130), der mit dem Roboter (106) gekoppelt ist;
Vergleichen der empfangenen dritten Eingabeinformation mit einem Kraftschwellenwert; und
Anzeigen an der grafischen Benutzerschnittstelle (136) an der Anzeige mindestens einer Angabe der dritten Eingabeinformation.

12. System (100) nach Anspruch 11, wobei die Computervorrichtung (120) ferner konfiguriert ist, um an der grafischen Benutzerschnittstelle (136) eine Angabe mindestens einer von einer Überschreitung des Kraftschwellenwertes durch die dritte Eingabeinformation und einer Kraftrichtung für die dritte Eingabeinformation, die von der Computervorrichtung (120) mit dem Koordinatensystem der grafischen Benutzerschnittstelle (136) korreliert wird, anzuzeigen.

13. System (100) nach einem der vorhergehenden Ansprüche, wobei die Computervorrichtung (120) konfiguriert ist, um an der grafischen Benutzerschnittstelle (136) einen ersten Verfahrweg und einen zweiten Verfahrweg anzuzeigen, wobei der erste Verfahrweg einem vorbestimmten Weg entspricht, der abzufahren ist, um an dem Werkstück (160) eine Vorformarbeit auszuführen, wobei der zweite Verfahrweg einem verfolgten Verfahrweg entspricht, der eingeschlagen wurde, während die Arbeit an dem Werkstück (160) durch die Bedienung des Roboters (106) ausgeführt wurde.

14. System (100) nach einem der vorhergehenden Ansprüche, wobei der Endeffektor (108) mit dem Roboter (106) gekoppelt oder daran montiert ist, wobei der Roboter (106) sechs Freiheitsgrade aufweist.

## Revendications

1. Système permettant de fournir une interface utilisateur graphique (136) pour un système robotique télécommandé (100) présentant un élément télécommandé (122) au niveau d'un poste d'opérateur (104) et un robot (106) au niveau d'un poste de robot (102), l'élément télécommandé (122) étant actionné par un opérateur pour commander le mouvement d'au moins une partie du robot (106), le système comprenant :
un dispositif informatique (120) présentant au moins un processeur, le dispositif informatique (120) étant **caractérisé en ce qu'**il est conçu pour :
recevoir des premières informations d'entrée présentant un indicateur de robot (142), l'indicateur de robot (142) indiquant au moins l'une parmi une position et une orientation d'au moins une partie du robot (106) sur l'interface utilisateur graphique (136), l'indicateur de robot (142) étant au moins l'une parmi un position et une orientation d'un point d'outil (162) d'un effecteur terminal (108) du robot (106), les premières informations d'entrée comprenant des informations détectées par un ou plusieurs capteur(s) (114) dans le poste de robot (102) ;
étalonner l'indicateur de robot (142), c'est-à-dire au moins l'une parmi une position et une orientation d'un point d'outil (162) d'un effecteur terminal (108) du robot (106), par rapport à un système de coordonnées de l'interface utilisateur graphique (136) pour obtenir un indicateur de robot étalonné ;
recevoir des deuxièmes informations d'entrée présentant un indicateur d'élément télécommandé (144), l'indicateur d'élément télécommandé (144) indiquant au moins l'une parmi une position et une orientation de l'élément télécommandé (122) sur l'interface utilisateur graphique (136), l'indicateur d'élément télécommandé (144) étant au moins l'une parmi une position et une orientation d'un point d'outil (140) de l'élément télécommandé (122) ;
étalonner l'indicateur d'élément télécommandé (144), c'est-à-dire au moins l'une parmi la position et l'orientation du point d'outil (140) de l'élément télécommandé (122), par rapport au système de coordonnées de l'interface utilisateur graphique (136) pour obtenir un indicateur d'élément télécommandé étalonné ;
synchroniser l'indicateur d'élément télécommandé étalonné, c'est-à-dire au moins l'une parmi une position et une orientation étalonnée(s) du point d'outil (140) de l'élément télécommandé (122), avec un emplacement de la représentation de l'indicateur de robot étalonné, c'est-à-dire d'au moins l'une parmi une position et une orientation étalonnée(s) du point d'outil (162) de l'effecteur terminal (108) du robot (106), qui est représenté visuellement sur l'interface utilisateur graphique (136) ; et
afficher, sur un dispositif d'affichage (124), l'interface utilisateur graphique (136), l'interface utilisateur graphique (136) étant conçue pour afficher un mouvement dans le poste de robot (102) qui est associé à au moins un mouvement du robot (106) qui est mis en corrélation avec l'opération de l'élément télécommandé (122).

2. Système (100) selon la revendication 1, comprenant en outre le dispositif d'affichage (124) et un réseau de communication (118), le réseau de communication (118) présentant une ou plusieurs liaison(s) de communication (128) structurée(s) pour coupler en communication le poste de robot (102) au poste d'opérateur (104), la ou les liaison(s) de communication (128) étant conçue(s) pour communiquer au moins l'une des premières informations d'entrée provenant du poste de robot (102) et des deuxièmes informations d'entrée provenant du poste d'opérateur (104) au dispositif informatique (120).

3. Système (100) selon la revendication 1 ou 2, comprenant en outre l'élément télécommandé (122).

4. Système (100) selon la revendication 1 ou 2, comprenant en outre l'élément télécommandé (122), et dans lequel l'élément télécommandé (122) est une manette haptique (138).

5. Système (100) selon l'une quelconque des revendications précédentes, dans lequel l'indicateur de robot (142) représente au moins l'une parmi une partie et une orientation d'un point d'outil (162) du robot (106).

6. Système (100) selon l'une quelconque des revendications précédentes, dans lequel le dispositif informatique (120) est en outre conçu pour mettre en corrélation une forme géométrique entrée d'une pièce à travailler (160) dans le poste de robot (102) avec le système de coordonnées de l'interface utilisateur graphique (136), et en outre dans lequel le dispositif informatique (120) est conçu pour synchroniser au moins l'une parmi une position et une orientation de la pièce à travailler (160) avec l'indicateur de robot étalonné.

7. Système (100) selon la revendication 6, comprenant en outre un ou plusieurs capteur(s) (114), dans lequel le ou les capteur(s) (114) détecte(nt) des informations relatives à une ou plusieurs caractéristique(s) géométrique(s) de la pièce à travailler (160).

8. Système (100) selon la revendication 7, dans lequel le dispositif informatique (120) est conçu pour déterminer la présence d'une ou de plusieurs différence(s) entre la pièce à travailler (160) et la forme géométrique entrée, et dans lequel l'interface utilisateur graphique (136) est conçue pour représenter visuellement au moins l'une parmi la ou les différences(s) déterminée(s).

9. Système (100) selon la revendication 8, dans lequel la ou les différences(s) comprend/comprennent au moins l'une parmi des différences de quantité de matériau, de forme géométrique et de dimension.

10. Système (100) selon la revendication 9, dans lequel le ou les capteur(s) (114) comprend/comprennent un système de vision conçu pour détecter la ou les caractéristique(s) géométrique(s) de la pièce à travailler (160).

11. Système (100) selon l'une quelconque des revendications précédentes, dans lequel le dispositif informatique (120) est en outre conçu pour :
recevoir des troisièmes informations d'entrée provenant d'un capteur de force (130) couplé au robot (106) ;
comparer les troisièmes informations d'entrée reçues à une valeur seuil de force ; et
afficher sur l'interface utilisateur graphique (136) sur le dispositif d'affichage au moins une indication des troisièmes informations d'entrée.

12. Système (100) selon la revendication 11, dans lequel le dispositif informatique (120) est en outre conçu pour afficher sur l'interface utilisateur graphique (136) une indication d'au moins l'une des troisièmes informations d'entrée dépassant la valeur seuil de force, et une direction de force pour les troisièmes informations d'entrée qui sont mises en corrélation, au moyen du dispositif informatique (120), avec le système de coordonnées de l'interface utilisateur graphique (136).

13. Système (100) selon l'une quelconque des revendications précédentes, dans lequel le dispositif informatique (120) est conçu pour afficher, sur l'interface utilisateur graphique (136), un premier chemin de déplacement et un second chemin de déplacement, le premier chemin de déplacement correspondant à un chemin prédéterminé à parcourir pour effectuer un travail sur la pièce à travailler (160), le second chemin de déplacement correspondant à un chemin de déplacement suivi pris lorsque la pièce à travailler a été travaillée (160) par une opération du robot (106).

14. Système (100) selon l'une quelconque des revendications précédentes, dans lequel l'effecteur terminal (108) est couplé au robot (106) ou monté sur celui-ci, le robot (106) ayant six degrés de liberté.
